(19) Europäisches Patentamt
European Patent Office
Office européen des brevets

(11) **EP 4 231 050 A1**

(12) **EUROPEAN PATENT APPLICATION**

(43) Date of publication:
**23.08.2023 Bulletin 2023/34**

(21) Application number: **22156986.6**

(22) Date of filing: **16.02.2022**

(51) International Patent Classification (IPC):
*G01S 13/44* (2006.01)  *G01S 7/35* (2006.01)
*G01S 13/931* (2020.01)  *G01S 13/34* (2006.01)
*G01S 13/58* (2006.01)

(52) Cooperative Patent Classification (CPC):
**G01S 7/356; G01S 7/354; G01S 7/358;**
**G01S 13/343; G01S 13/44; G01S 13/931;**
G01S 13/584

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Veoneer Sweden AB**
**447 37 Vårgårda (SE)**

(72) Inventors:
• **MOSS, Jonathan**
  **85716 Unterschleissheim (DE)**
• **GOELZ, Hansjerg**
  **85716 Unterschleissheim (DE)**

(74) Representative: **Westpatent AB**
**Almekärrsvägen 11**
**443 39 Lerum (SE)**

(54) **NUMERICALLY EFFICIENT RADAR SIGNAL PROCESSING FOR AUTOMOTIVE RADARS**

(57) An automotive radar transceiver system (120, 200) comprising an antenna array (210) and a processing device (230) for processing radar signals received via the antenna array (210),
where the processing device (230) is arranged to obtain a complex-valued vector ($x$) of signal values, where each signal value is indicative of a radar signal received at a corresponding antenna element (220) in the antenna array (210),
where the processing device (230) is arranged to generate a covariance matrix ($C$) from the complex-valued vector ($x$) of signal values by multiplying the complex-valued vector ($x$) with its complex conjugate,
where the processing device (230) is arranged to perform a QR-decomposition of the covariance matrix ($C$) to generate a Q-matrix ($Q$), and to determine one or more angles associated with respective targets based on the QR-decomposition of the covariance matrix ($C$).

FIG. 1

**Description**

DESCRIPTION OF THE DISCLOSURE

The present disclosure relates to automotive radar systems and in particular to radar systems comprising antenna arrays adapted for detecting the bearing to one or more targets in terms of azimuth and/or elevation angle, in addition to detecting range and radial velocity. There are disclosed methods, processing units, and systems for numerically efficient processing of radar signals particularly suitable for use in automotive radar systems.

Automotive radar systems are under constant development. Ever increasing demands on performance metrics such as radar range and angular resolution drives this development. Some modern automotive radar systems are required to be able to separate relatively small objects from each other, such as motorcycles, which are at the same radial range from the radar transceiver and which move with the same radial velocity. This separation of objects requires a radar system which has sufficient performance in terms of azimuth and/or elevation angle separability. A radar system lacking in angle separability performance may not be able to separate two smaller objects from each other, thus risking that higher layer control functions misinterpret the traffic situation, which is undesired.

In order to meet the increasing requirements on angular resolution, radar systems based on large antenna arrays can be used, i.e., antenna arrays spanning over a large aperture and comprising a large number of transmit (Tx) and receive (Rx) antenna elements. Sparse and/or non-uniform antenna arrays can also be used to achieve an increase in angular separability. However, processing the output from such arrays may involve a prohibitive computational load due to the large number of transmit/receive antenna pairs. The hardware cost also increases, which is undesired.

There is a need for automotive radar systems with improved angular resolution, which are more efficient in terms of computational complexity and also less costly in terms of signal processing hardware.

It is an object of the present disclosure to provide an improved automotive radar system. This object is at least in part obtained by an automotive radar transceiver system comprising an antenna array and a processing device for processing radar signals received via the antenna array. The processing device is arranged to obtain a complex-valued vector $x$ of signal values, where each signal value is indicative of a radar signal received at a corresponding antenna element in the antenna array. The processing device is also arranged to generate a covariance matrix $C$ from the complex-valued vector $x$ of signal values by multiplying the complex-valued vector $x$ with its complex conjugate. The processing device is also arranged to perform a QR-decomposition of the covariance matrix $C$ to generate a Q-matrix $Q$, and to determine one or more angles associated with respective targets based on the QR-decomposition of the covariance matrix $C$. This way an enhanced angular resolution is obtained at reduced computational complexity, which is an advantage. The method is suitable for continuous real time processing in an automotive radar system, which is a further advantage.

According to one preferred application of the technique, the processing involves a single QR decomposition while adding FFT support to visualize the angles of arrival and using the Bartlett method for azimuth gating, which removes unwanted artifacts due to the low complexity processing.

The complex-valued vector $x$ of signal values may, for instance, correspond to radar detection data for a given range and radial velocity.

The method is particularly suitable for implementation together with a frequency modulated continuous wave (FMCW) principle of operation, which is a common mode of radar operation in automotive radar transceivers.

According to some aspects, the processing device is arranged to separate one or more true target angles from one or more false target angles out of the determined target angles based on FFT processing of the obtained complex-valued vector $x$ of signal values. This increases the reliability of the method at reasonable additional computational complexity.

According to other aspects, the processing device is arranged to determine the given range and radial velocity for performing the QR-decomposition based on FFT processing of radar signals received at the antenna elements of the antenna array. Thus, a combination of, e.g., the Bartlett method and QR-decomposition of the covariance matrix is proposed, which combination provides high angular resolution at reduced computational complexity, which is an advantage.

The processing device may furthermore be arranged to determine the one or more angles associated with respective targets based on a selected column vector from the Q-matrix $Q$. By only using a single column vector of the Q-matrix, further computational complexity reduction is achieved. The selected column vector is preferably the final column vector $e_N$ in the Q-matrix.

According to some further aspects, the processing device is arranged to detect one or more targets in terms of range and radial velocity, and to obtain a complex-valued vector $x$ of signal values for each range and radial velocity associated with a detected target. This way the QR-decomposition based angular analysis need only be performed for a subset of R-D cells in the R-D map, providing even more reduction in computational load. The processing device may also be arranged to only obtain a complex-valued vector $x$ of signal values for targets that are detected in a predetermined span of ranges and/or at a predetermined radial velocity and/or in a predetermined azimuth direction span. Thus, the QR-decomposition based angular refinement method is focused in the most interesting directions to resolve targets in those directions.

To even further reduce the computational burden associated with the super-resolution angular processing, the processing device can be arranged to update the inverse covariance matrix $C^{-1}$ over time using a time sequence of complex-valued vectors of signal values, where each signal value in a complex-valued vector is indicative of a radar signal received at a corresponding antenna element in the antenna array at a given point in time. This allows for further refinement over time, which is an advantage.

The processing device may also be arranged to update the inverse covariance matrix $C^{-1}$ or the matrix Q derived from QR-decomposition over time using a Sherman-Morrison method of update. This is a particularly efficient method for time update.

The automotive radar transceiver system may optionally be arranged to adjust a center frequency of operation over time. This may help in resolving targets that are closely spaced in angle. The center frequency of operation may for instance be adjusted either within, or in-between FMCW transmission cycles in an automotive radar system.

There are also disclosed herein control units, vehicles, computer program products associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The present disclosure will now be described in detail with reference to the appended drawings, where:

Figure 1 schematically illustrates a vehicle with a radar sensor;

Figure 2 shows an antenna array for target angle estimation;

Figure 3 is a flow chart illustrating methods;

Figure 4 shows an example sensor signal processing system; and

Figure 5 illustrates an example computer program product.

DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

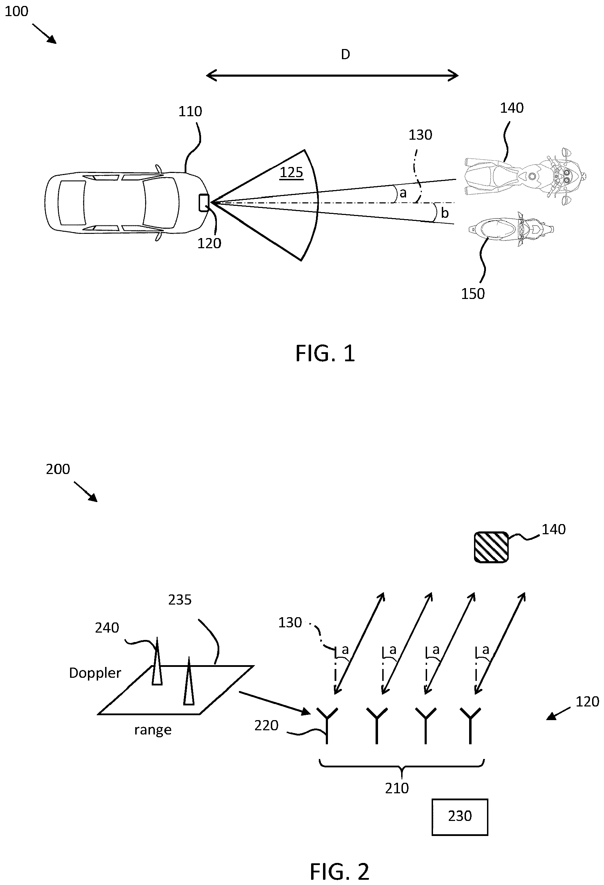

Figure 1 illustrates an example traffic scenario 100 where a vehicle 110 with a radar transceiver system 120 approaches two motorcycles 140, 150. The radar transceiver system 120 is associated with a field of view 125. This example radar transceiver system 120 is a forward looking radar. The techniques disclosed herein are however not limited to forward looking radar systems, but can be used also in corner radars and other types of radar systems.

The radar transceiver system 120 comprises a radar sensor which is arranged to transmit a radar signal over a radar bandwidth. According to some aspects, the radar sensor is arranged to transmit a frequency modulated continuous wave (FMCW) radar signal over the radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal.

Given an FMCW radar signal format, the distance D to a target 140, 150 may be determined based on a first Discrete Fourier Transform (DFT), or Fast Fourier Transform (FFT), and the radial velocity or Doppler frequency may be determined based on a second DFT or FFT, in a known manner. The result of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the radar transceiver system 120. Due to the limitations of sampling speed, the velocity of the target is often under-sampled, and this can be corrected by observing movement using a tracker or similar device. A good overview of rudimentary FMCW radar processing is given in the lecture notes "Introduction to mmwave Sensing: FMCW Radars" by Sandeep Rao, Texas Instruments, 2017.

None of the two motorcycles in the example 100 has a large radar cross section (RCS), and they are located at about the same distance D from the radar transceiver system 120. The two motorcycles also move with approximately the same radial velocity with respect to the radar transceiver system 120. Thus, to separate the two targets 140, 150, it is required to determine the target angles a, b, e.g., with respect to some boresight direction 130 in azimuth and or elevation angle. A radar transceiver which does not have the required angle separability performance will see the two targets as a single target unless the distance or radial velocity to one of the targets change relative to the other target.

Figure 2 illustrates an example automotive radar transceiver system 200 which comprises an antenna array 210, i.e., a plurality of antenna elements 220 comprising a combination of transmit antennas and receive antennas, and a processing device 230 adapted to process radar signals received via the antenna elements 220. Each pair of transmit antenna and receive antenna in the array 210 gives rise to a respective range-Doppler map 235, indicating received radar signal energy 240 at different distances and radial velocities. Each range-Doppler map cell is a complex value associated with a phase and a magnitude, in a known manner. A complex-valued vector $x$ of signal values corresponding to a given range and Doppler can be obtained by extracting corresponding values from the R-D map of each antenna pair.

The array 210 may comprise multiple antenna elements that are spaced uniformly such as on the order of a half-lambda (roughly 2mm) . Alternatively they may be spaced more than half lambda. Some previously known radar systems use multiple transmission antennas either sequentially or simultaneously in time to create a virtual aperture sometimes referred to as a Synthetic Aperture Radar (SAR), that is larger than the physical array. The net effect is a relatively small number of real or virtual antenna elements and a relatively small physical aperture.

The angle a from the radar sensor array 210 to a target 140, such as one of the motorcycles in Figure 1, can be determined conveniently by a third FFT - the angle FFT, applied to range-Doppler cells from each range-Doppler map generated by each transmit-antenna pair in the radar sensor array, after appropriate zero-padding. The determination of target angle using an FFT may for instance be realized using the Bartlett algorithm. The Bartlett algorithm is generally known and will therefore not be discussed in more detail herein. In case the antenna element spacing is non-uniform, a zero-padding of the complex-valued vector $x$ may be needed prior to the FFT operation. This method works well when there is a single large target in an R-D cell, but in case of similar sized targets in the same R-D cell with small angular separation, the method may result in a wrong angle being reported.

Super-resolution algorithms take the same input data as the traditional angle determination techniques, such as the Bartlett FFT-based method, but apply more advanced methods to separate the targets in azimuth and/or elevation angle. There are a number of algorithms that can be used for this purpose, such as the MUltiple SIgnal Classification (MUSIC) algorithm and the Capon super-resolution methods. These super-resolution methods are generally known and will therefore not be discussed in more detail herein.

For example, the Capon super-resolution method, also known as the Minimum Variance Distortionless Response (MVDR) is based on the maximization of the test variable $S_{MVDR}(\theta)$,

$$S_{MVDR}(\theta) = \frac{1}{s^H(\theta)C^{-1}s(\theta)}$$

where $(\cdot)^H$ denotes Hermitian transpose, $s(\theta)$ is the steering vector and where $C^{-1}$ is the matrix inverse of the radar signal covariance matrix.

According to some aspects, the angle $\theta$ corresponds to the angle a in Figure 2, and can be regarded as a "look"-angle $\theta$.

The radar signal covariance matrix $C$ is obtained by, e.g., multiplying the vector of the antenna array corresponding to a R-D cell with its conjugate transpose. Thus, an N-element vector is transformed into an N by N matrix.

A large value of $S_{MVDR}(\theta)$ for some angle $\theta$ indicates a likely target at that angle, and a small value of the test variable for some angle is indicative of a low probability that a target is present at the angle. The test variable $S_{MVDR}(\theta)$ can therefore be used to determine angles associated with targets in vicinity of the radar transceiver system 120, 200. The vector

$$s(\theta) = \begin{bmatrix} 1 & e^{-j\theta} & \cdots & e^{-j\theta(M-1)} \end{bmatrix}^T$$

is often referred to as the steering vector, this vector "steers" the test variable in direction of the look-angle $\theta$, being an angle argument $\theta$, allowing detection of targets at various azimuth and/or elevation angles.

In the context of an FMCW radar with N antenna elements 220 in the antenna array 210, the N received signal components from the N antennas constitute the complex-valued column vector $x$ of length N. The N received signals are converted to an N × N covariance matrix $C$ by multiplying vector $x$ by its complex conjugate, i.e.,

$$C = xx^H$$

$S_{MVDR}(\theta)$ can then be evaluated for different angles of interest.

The method can be refined by adding more data to the covariance matrix **C** over time, i.e., the test variable $S_{MVDR}(\theta)$ can also be updated over time by a time sequence of updates to the covariance matrix **C**. For instance, if a first observation $x_1$ and a second observation $x_2$ of some target is made, such as by transmitting a first and a second radar cycle or first and second blocks of FMCW chirps, then an updated covariance matrix can be calculated which has more information about the target compared to when only using one of the complex valued vectors. The two matrices can be combined with equal or non-equal weights, i.e.,

$$C = w_1 x_1 x_1^H + w_2 x_2 x_2^H$$

where, for example, $w_1 + w_2 = 1$. With two or more observations of the targets that have been combined into a single covariance matrix, it may now be possible to separate two closely-spaced targets.

In a second step of many known super-resolution methods, a matrix inverse of the (combined) NxN covariance matrix **C** is performed. For instance, the test variable $S_{MVDR}(\theta)$ comprises a matrix inverse. This matrix inverse is computationally expensive, and it is a primary purpose of the methods discussed herein to avoid this matrix inverse. If the covariance matrix is not invertible, the targets cannot be reliably separated, and this may be solved by making more observations of the target, successively refining the combined covariance matrix.

The third step is to multiply the matrix inverse by the steering vector $s(\theta)$ correspondingly to the angles of arrival of interest and take the reciprocal. This may, e.g., be for some predetermined azimuth angle (and/or elevation angle) in 0.5° steps or so. For each look-angle $\theta$, the steering vector is calculated, and the matrix multiplication is performed followed by the reciprocal.

The numerically optimized methods disclosed herein comprises some changes to the above standard process. The first is that a pseudo-inverse is taken rather than a full matrix inverse, i.e., $C^{-1}$ in the test variable $S_{MVDR}(\theta)$ is replaced by its Moore-Penrose or pseudo-inverse $C^+$. The pseudo-inverse is significantly less costly to determine compared to the full matrix inverse, especially if the matrix is large, i.e., if the antenna array 210 of the radar system comprises many Tx-Rx antenna element pairs.

The pseudo-inverse can be determined by decomposing the matrix **C** into an orthogonal matrix **Q** and an upper matrix **R**, by the well-known QR-decomposition method. The orthogonal matrix **Q** is such that its transpose is also its inverse. According to some aspects, only the final column of the matrix **Q** is used. The decomposition from **C** into matrix **Q** can be implemented in several known numerically efficient ways.

To further reduce complexity, the final column vector from **Q** is extracted and used to determine target angle, i.e., if

$$Q = [e_1, e_2, \cdots, e_N]$$

then $e_N$ is extracted and multiplied by the steering vector $s(\theta)$ for the look-angles $\theta$ of interest. An efficient method for this is simply using a zero-padded FFT of the vector $e_N$. If the antenna array is sparse and/or non-uniform then the elements of vector $e_N$ should be positioned in the vector corresponding to their antenna positions, e.g. on a half-lambda grid, prior to the FFT. Radar "system-on-chips" often include dedicated FFT processors and thus are very fast and efficient.

Once the test variable has been constructed, rather than determining a reciprocal of the test variable and identifying a peak, it is proposed to skip the reciprocal operation and instead identify a minimum value, which avoids the need for taking the reciprocal in the expression for the test variable.

The above steps can be repeated after updating the covariance matrix **C**. Alternatively one may use the Sherman Morrison formula to update the matrix **Q**. Use of the Sherman Morrison method avoids the matrix **Q** being re-calculated from scratch by using an equation that updates matrix **Q** with the additional covariance matrix information. The formula for the update is based on matrix multiplications with one scalar division, thus being less computationally intensive.

It is appreciated that the above example methods of performing super-resolution angular target determination at reduced computational complexity can be generalized. There is disclosed herein an automotive radar transceiver system 120, 200 comprising an antenna array 210 and a processing device 230 for processing radar signals received via the antenna array 210. The antenna array may comprise one or more transmit antenna elements and a plurality of receive antenna elements. The antenna array may be set up to generate at least two antenna pairs, and optionally also a number of virtual antenna pairs. Thus, there may be a significant amount of Tx-Rx antenna pairs, which makes computational efficiency an important matter. The antenna array may furthermore be both non-uniform and/or sparse relative to the carrier frequency. I.e., the antenna element spacing in the array need not necessarily be uniform and half-wavelength spaced from each other. The methods are equally applicable to azimuth angle determination and elevation angle determination.

The processing device 230 is arranged to obtain a complex-valued vector $x$ of signal values, where each signal value is indicative of a radar signal received at a corresponding antenna element 220 in the antenna array 210. This complex-valued vector was discussed above. It can for instance be obtained by extracting corresponding range-Doppler cell values from the range-Doppler maps of each antenna pair in the antenna array. The complex values can also be representative of the phases of an incoming radar signal at the different antenna elements as schematically illustrated in Figure 2, since it is primarily the phase of the incoming wavefront that provides information about the angle of arrival of the radar signal at the antenna array. The complex-valued vector $x$ of signal values may for instance correspond to radar detection data for a given range and radial velocity, as extracted from the range-Doppler maps of the different antenna pairs in the antenna array. The processing device 230 may be arranged to determine the given range and radial velocity for performing the QR-decomposition based on FFT processing of radar signals received at the antenna elements 220 of the antenna array 210. Thus, a low complexity FFT-based method may initially be applied, and the QR-decomposition based methods can then be used to focus attention of a subset of angles, thus increasing the angular separability for those angles of interest.

The processing device 230 is furthermore arranged to generate a covariance matrix $C$ from the complex-valued vector $x$ of signal values by multiplying the complex-valued vector $x$ with its complex conjugate, i.e.,

$$C = xx^H$$

Using a covariance matrix in this manner for determining angle of arrival of an incoming radar signal is generally known and the details and background of the method in general will not be discussed in more detail herein.

A common method for determining angles of targets in the field of view 125 of the radar transceiver system 120 is by means of FFT processing of the complex-valued vector $x$. One example is the well-known Bartlett algorithm. In time series analysis, Bartlett's method (also known as the method of averaged periodograms), is used for estimating power spectra. It provides a way to reduce the variance of the periodogram in exchange for a reduction of resolution, compared to standard periodograms. A final estimate of the spectrum at a given frequency is obtained by averaging the estimates from the periodograms (at the same frequency) derived from non-overlapping portions of the original series.

The processing device 230 is furthermore arranged to perform a QR-decomposition of the covariance matrix $C$ to generate a Q-matrix $Q$ and an R-matrix $R$, and to determine one or more angles associated with respective targets based on the QR-decomposition of the covariance matrix $C$.

According to an example, the QR decomposition can be used to construct a pseudo-inverse $C^+$ to the covariance matrix $C$, which can be used instead of the true matrix inverse $C^{-1}$. This results in considerable savings in terms of computational complexity. The QR-decomposition and the pseudo-inverse can be updated sequentially over time by application of the Sherman-Morrison method.

To further reduce complexity, the final column vector from $Q$ can be extracted. I.e., if the matrix $Q$ comprises n column vectors

$$Q = [e_1, e_2, \cdots, e_N]$$

then $e_N$ can be extracted and multiplied by the steering vector $s(\theta)$ in each look-angle $\theta$. Thus, the full QR decomposition may not be necessary to use in the refined angular detection. Instead, the processing device 230 can be arranged to determine the one or more angles associated with respective targets based on a selected column vector from the Q-matrix $Q$, and preferably the final column vector in the Q-matrix, i.e., $e_N$ from $Q = [e_1, e_2, \cdots, e_N]$. An efficient method for realizing this part of the method is simply using a zero-padded FFT of the vector $e_N$ to determine several look angles $\theta$ at the same time. If the antenna array is sparse and/or non-uniform then the elements of vector $e_N$ should be positioned in the vector corresponding to their antenna positions, e.g. on a half-lambda grid, prior to the FFT. Radar "system-on-chips" often include dedicated FFT processors and thus are very fast and efficient.

This simplified algorithm may give rise to false targets in angle, i.e., artefacts may appear in the detection data that is a large angular distance from the true target but could still be erroneously interpreted as additional targets. To distinguish such false detection of target angles from true targets, the processing device 230 can be configured to separate the one or more true target angles from the one or more false target angles out of the determined target angles based on FFT processing of the obtained complex-valued vector $x$ of signal values. Thus, only target angles which also appear in the original Bartlett-based processing are deemed true target angles, and the rest discarded as artefacts due to the low-complexity processing. In other words, a method such as the Bartlett algorithm can be used to determine roughly where the true target or targets are located in angle, and then apply the QR-based methods to further refine the angle estimates of those targets, in many cases separating them as multiple targets in azimuth and discarding the false angles outside of the range indicated by the Bartlett method or other FFT-based processing method. Thus, the QR-decomposition based methods discussed herein can be used to focus on the angles where the Bartlett algorithm indicates potential target presence.

It is appreciated that angle processing in this manner can be performed for any given number of targets at any given respective range and radial velocity. Thus, the processing device 230 can be arranged to detect one or more targets in terms of range and radial velocity, and to obtain a complex-valued vector $x$ of signal values for each range and radial velocity associated with a detected target. The angle or angles of targets located at the given ranges and moving with the radial velocities can then be determined using parallel or sequential processing methods.

To reduce computation even further, the angular super-resolution can be performed only for combinations of range, radial velocity and general azimuth direction where a target that is relevant to the vehicle has been suspected. Thus, according to some aspects, the processing device 230 is optionally arranged to only obtain a complex-valued vector $x$ of signal values for targets that are detected in a predetermined span of ranges and/or at a predetermined radial velocity and/or predetermined general azimuth direction, i.e., an azimuth direction span. Again, the QR-decomposition based method is used to focus in on interesting combinations of range, radial velocity and angle, in order to further refine the determination of angle and possibly also separate closely spaced targets from each other by the increased angular resolution obtained from super-resolution methods like the MUSIC and the Capon methods.

The Bartlett method can also be performed selectively for a predetermined angle, and not for the whole field of view, to save some more signal processing operations. For example the Bartlett method may be performed only if the azimuth and/or elevation angle spectrum appears to have unwanted artifacts. Similarly the "normal" radar FFT processing may be replaced with a Bartlett discrete Fourier transform (DFT), where only relevant angles (azimuth and/or elevation) are checked-for, i.e., angles where one or more targets are believed to reside.

In case the inverse covariance matrix $C^{-1}$ is updated over time using a time sequence of complex-valued vectors $x$ of signal values, the angle separability of the radar system can be improved even further. For instance, the processing device 230 can be arranged to update the inverse covariance matrix $C^{-1}$ over time using a Sherman-Morrison method of update. The Sherman-Morrison method of update is computationally efficient, which of course is an advantage.

The automotive radar transceiver system 120, 200 is optionally also arranged to adjust a center frequency of operation over time. This potentially increases the quality of information entering into the covariance matrix over time, since a change in center frequency forces the targets to be received with different phases and hence appear different in the data coming from the antenna elements.

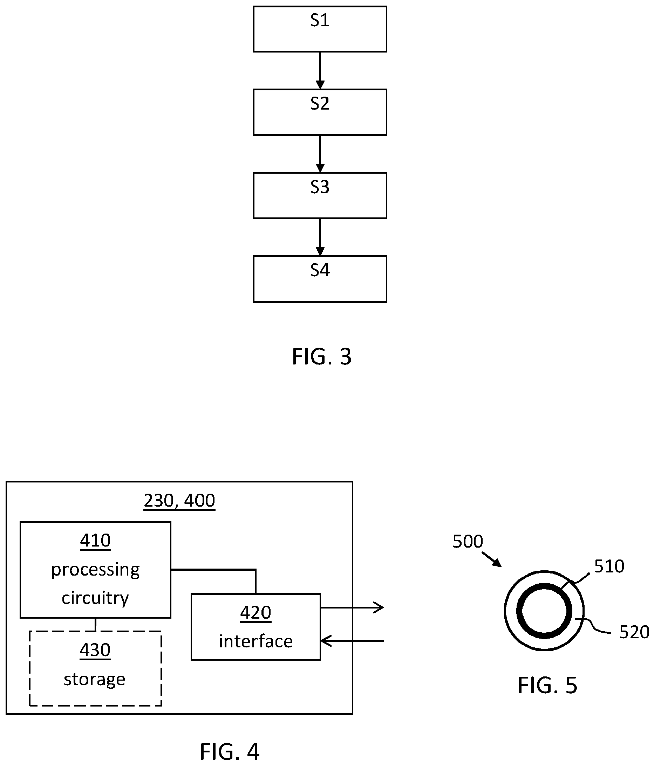

Figure 3 is a flow chart which summarizes the above discussions in terms of a method performed in an automotive radar transceiver system 120, 200 comprising an antenna array 210 and a processing device 230 for processing radar signals received via the antenna array 210, the method comprising:

    obtaining S1 a complex-valued vector $x$ of signal values, where each signal value is indicative of a radar signal received at a corresponding antenna element 220 in the antenna array 210,

    generating S2 a covariance matrix $C$ from the complex-valued vector $x$ of signal values by multiplying the complex-valued vector $x$ with its complex conjugate,

    performing S3 a QR-decomposition of the covariance matrix $C$ to generate a Q-matrix, and

    determining S4 one or more angles associated with respective targets based on the QR-decomposition of the covariance matrix $C$.

Figure 4 schematically illustrates, in terms of a number of functional units, the components of a radar sensor signal processing system 400 according to an embodiment of the discussions herein. Processing circuitry 410 is provided using any combination of one or more of a suitable central processing unit CPU, multiprocessor, microcontroller, digital signal processor DSP, etc., capable of executing software instructions stored in a computer program product, e.g. in the form of a storage medium 430. The processing circuitry 410 may further be provided as at least one application specific integrated circuit ASIC, or field programmable gate array FPGA. The processing circuitry thus comprises a plurality of digital logic components.

Particularly, the processing circuitry 410 is configured to cause the system 400 to perform a set of operations, or steps. For example, the storage medium 430 may store the set of operations, and the processing circuitry 410 may be configured to retrieve the set of operations from the storage medium 430 to cause the system 400 to perform the set of operations. The set of operations may be provided as a set of executable instructions. Thus, the processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The sensor signal processing system 400 further comprises an interface 420 for communications with at least one external device, such as a radar transceiver system 120. As such the interface 420 may comprise one or more transmitters and receivers, comprising analogue and digital components and a suitable number of ports for wireline communication.

The processing circuitry 410 controls the general operation of the system 400, e.g. by sending data and control signals to the interface 420 and the storage medium 430, by receiving data and reports from the interface 420, and by retrieving data and instructions from the storage medium 430. Other components, as well as the related functionality, of the control node are omitted in order not to obscure the concepts presented herein.

Figure 5 shows a computer program product 500 comprising computer executable instructions 510 on computer media 520 to execute any of the methods disclosed herein.

The present invention is not limited to the above, but may vary freely within the scope of the appended claims. For example, the processing device 230 may be constituted by one central device or by several separate devices that either can be located together or in a more or less distributed manner.

**Claims**

1. An automotive radar transceiver system (120, 200) comprising an antenna array (210) and a processing device (230) for processing radar signals received via the antenna array (210),

   where the processing device (230) is arranged to obtain a complex-valued vector ($x$) of signal values, where each signal value is indicative of a radar signal received at a corresponding antenna element (220) in the antenna array (210), where the processing device (230) is arranged to generate a covariance matrix ($C$) from the complex-valued vector ($x$) of signal values by multiplying the complex-valued vector ($x$) with its complex conjugate,
   where the processing device (230) is arranged to perform a QR-decomposition of the covariance matrix ($C$) to generate a Q-matrix ($Q$), and to determine one or more angles associated with respective targets based on the QR-decomposition of the covariance matrix ($C$).

2. The automotive radar transceiver system (120, 200) according to claim 1, arranged to operate based on a frequency modulated continuous wave, FMCW, principle of operation.

3. The automotive radar transceiver system (120, 200) according to claim 1 or 2, where the processing device (230) is arranged to separate one or more true target angles from one or more false target angles out of the determined target angles based on Fast Fourier Transform, FFT, processing of the obtained complex-valued vector ($x$) of signal values.

4. The automotive radar transceiver system (120, 200) according to any previous claim, where the complex-valued vector ($x$) of signal values correspond to radar detection data for a given range and radial velocity.

5. The automotive radar transceiver system (120, 200) according to any previous claim, where the processing device (230) is arranged to determine the given range and radial velocity for performing the QR-decomposition based on FFT processing of radar signals received at the antenna elements (220) of the antenna array (210).

6. The automotive radar transceiver system (120, 200) according to any previous claim, where the processing device (230) is arranged to determine the one or more angles associated with respective targets based on a selected column vector from the Q-matrix ($Q$).

7. The automotive radar transceiver system (120, 200) according to claim 6, where the selected column vector is the final column vector ($e_N$) in the Q-matrix ($Q$).

8. The automotive radar transceiver system (120, 200) according to any previous claim, where the processing device (230) is arranged to detect one or more targets in terms of range and radial velocity, and to obtain a complex-valued vector ($x$) of signal values for each range and radial velocity associated with a detected target.

9. The automotive radar transceiver system (120, 200) according to claim 8, where the processing device (230) is furthermore arranged to only obtain a complex-valued vector ($x$) of signal values for targets that are detected in a predetermined span of ranges and/or at a predetermined radial velocity and/or in a predetermined azimuth direction span.

10. The automotive radar transceiver system (120, 200) according to any previous claim, where the processing device (230) is arranged to update the inverse covariance matrix ($C^{-1}$) over time using a time sequence of complex-valued vectors ($x$) of signal values, where each signal value in a complex-valued vector is indicative of a radar signal received at a corresponding antenna element (220) in the antenna array (210) at a given point in time.

11. The automotive radar transceiver system (120, 200) according to any previous claim, where the processing device (230) is arranged to update the inverse covariance matrix ($C^{-1}$) or the matrix Q derived from QR-decomposition over time using a Sherman-Morrison method of update.

12. The automotive radar transceiver system (120, 200) according to any previous claim, where the automotive radar transceiver system (120, 200) is arranged to adjust a center frequency of operation over time.

13. The automotive radar transceiver system (120, 200) according to claim 12, where the center frequency of operation is adjusted in-between FMCW transmission cycles.

14. A vehicle (110) comprising the automotive radar transceiver system (120, 200) according to any previous claim.

15. A method performed in an automotive radar transceiver system (120, 200) comprising an antenna array (210) and a processing device (230) for processing radar signals received via the antenna array (210), the method comprising:

obtaining (S1) a complex-valued vector ($x$) of signal values, where each signal value is indicative of a radar signal received at a corresponding antenna element (220) in the antenna array (210),
generating (S2) a covariance matrix ($C$) from the complex-valued vector ($x$) of signal values by multiplying the complex-valued vector ($x$) with its complex conjugate,
performing (S3) a QR-decomposition of the covariance matrix ($C$) to generate a Q-matrix ($Q$), and
determining (S4) one or more angles associated with respective targets based on the QR-decomposition of the covariance matrix ($C$).

FIG. 1

FIG. 2

FIG. 3

FIG. 4

FIG. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2021/116531 A1 (SHABTAY OPHIR [IL] ET AL) 22 April 2021 (2021-04-22)<br>* paragraph [0041] *<br>* paragraph [0112] *<br>* paragraph [0134] – paragraph [0137] *<br>* paragraph [0153] – paragraph [0154] *<br>* paragraph [0164] *<br>* paragraph [0194] *<br>* paragraph [0212] – paragraph [0215] *<br>* paragraph [0287] – paragraph [0289] *<br>* paragraph [0298] *<br>* figures 1-12 *<br>----- | 1-10,<br>12-15<br>11 | INV.<br>G01S13/44<br>G01S7/35<br>G01S13/931<br>G01S13/34<br><br>ADD.<br>G01S13/58 |
| Y<br><br><br><br><br><br><br><br>A | Tayem Nizar: "Real Time Implementation for DOA Estimation Methods on NI-PXI Platform",<br>Progress in electromagnetics research. Research B,<br>1 May 2014 (2014-05-01), pages 103-121, XP055943715,<br>Retrieved from the Internet:<br>URL:http://www.jpier.org/download/14012307.pdf<br>[retrieved on 2022-07-18]<br>* page 14, line 3 – line 27 *<br>* page 104, line 38 – page 106, line 11 *<br>* page 112, line 13 – line 17 *<br>* figures 1-21 *<br>* equations (1)-(14) *<br>----- | 1-10,<br>12-15<br><br><br><br><br><br><br>11 | TECHNICAL FIELDS SEARCHED (IPC)<br><br>G01S |
| Y<br><br>A | US 2017/248685 A1 (STEINBUCH DIRK [DE] ET AL) 31 August 2017 (2017-08-31)<br>* paragraph [0024] *<br>* figures 1-4 *<br>----- | 12,13<br><br>1-11,14,<br>15 | |

–/–

The present search report has been drawn up for all claims

| Place of search | Date of completion of the search | Examiner |
|---|---|---|
| Munich | 18 July 2022 | Köppe, Maro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................
& : member of the same patent family, corresponding
    document

EPO FORM 1503 03.82 (P04C01)

## EP 4 231 050 A1

### EUROPEAN SEARCH REPORT

Application Number

EP 22 15 6986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FRANK REICHENBACH ET AL: "On Improving the Precision of Localization with Minimum Resource Allocation", COMPUTER COMMUNICATIONS AND NETWORKS, 2007. ICCCN 2007. PROCEEDINGS OF 16TH INTERNATIONAL CONFERENCE ON, IEEE, PI, 1 August 2007 (2007-08-01), pages 1093-1098, XP031137009, ISBN: 978-1-4244-1250-1 * chapter III. C. An Extension: Adding a New Position Estimate * | 1-15 | |
| | ----- | | |

TECHNICAL FIELDS
SEARCHED      (IPC)

The present search report has been drawn up for all claims

| Place of search | Date of completion of the search | Examiner |
|---|---|---|
| Munich | 18 July 2022 | Köppe, Maro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 22 15 6986

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2022

| Patent document cited in search report | | Publication date | Patent family member(s) | | | Publication date |
|---|---|---|---|---|---|---|
| US 2021116531 | A1 | 22-04-2021 | CN | 114675270 | A | 28-06-2022 |
| | | | EP | 4030191 | A2 | 20-07-2022 |
| | | | US | 2021116531 | A1 | 22-04-2021 |
| US 2017248685 | A1 | 31-08-2017 | CN | 107121671 | A | 01-09-2017 |
| | | | DE | 102016202936 | A1 | 31-08-2017 |
| | | | US | 2017248685 | A1 | 31-08-2017 |

EPO FORM P0459

For more details about this annex : see Official Journal of the European Patent Office, No. 12/82